**Europäisches Patentamt**

**European Patent Office**

**Office européen des brevets**

(19)

(11) Veröffentlichungsnummer: **0 501 274 A2**

# (12) EUROPÄISCHE PATENTANMELDUNG

(21) Anmeldenummer: **92102633.2**

(22) Anmeldetag: **18.02.92**

(51) Int. Cl.⁵: **B29B 13/02**, //B29K81:00

(30) Priorität: **01.03.91 DE 4106544**
**15.01.92 DE 4200789**

(43) Veröffentlichungstag der Anmeldung:
**02.09.92 Patentblatt 92/36**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Arlt, Wolfgang, Dr.**
**Schönwasserstrasse 230c**
**W-4150 Krefeld(DE)**
Erfinder: **Schmidt, Manfred, Dr.**
**Erich-Klausener-Strasse 37**
**W-4150 Krefeld(DE)**
Erfinder: **Uerdingen, Walter, Dr.**
**Humperdinckstrasse 41**
**W-5090 Leverkusen(DE)**

(54) **Verfahren zur Nachkristallisation von teilkristallinen Thermoplasten.**

(57) Die Erfindung betrifft ein Verfahren zur Nachkristallisation von amorphen oder teilkristallinen Thermoplasten, bei denen die Glastemperatur und der Schmelzpunkt weit auseinanderliegen, in einem Wirbelbett.

EP 0 501 274 A2

Die Erfindung betrifft ein Verfahren zur Nachkristallisation von amorphen oder teilkristallinen Thermoplasten, bei denen die Glastemperatur und der Schmelzpunkt weit auseinanderliegen, in einem Wirbelbett.

Hintergrund der Erfindung ist die Verwendung von teilkristallinen Thermoplasten als Material für Fasern, Garne und Filamente. Die verwendeten Spinnmaschinen sind zum Materialeinzug mit einwelligen Schnekkenmaschinen ausgerüstet. Amorpher, d.h. nicht kristallisierter Thermoplast führt in diesen Maschinen zu Einzugsproblemen, da die Einzugsöffnung verklebt.

Für den angesprochenen Verwendungszweck sind insbesondere hochmolekulare teilkristalline Thermoplaste geeignet, die aus dem, amorphen in den teilkristallinen Zustand überführt werden können, z.B. Polyphenylensulfid und Polyetherketone. Sie zeichnen sich jedoch durch ein verzögertes Kristallisationsverhalten aus, so daß nur weitgehend amorphes Material aus dem Herstellungsprozeß erhalten wird. Dieses Material wird nachkristallisiert.

Es wurde gefunden, daß die Wirbelschichttechnik das geeignete Verfahren für diese Aufgabe ist. Wirbelschichten sind bekannt (vgl. Ullmanns Enzyklopädie der technischen Chemie, Band 3, (1973)). Unter der Wirbelschichttechnik wird ein Verfahren verstanden, bei dem ein Gasstrom durch eine Schüttung von feinkörnigem Feststoff mit einer solchen Geschwindigkeit geleitet wird, daß die aufgewirbelten Feststoffteilchen eine flüssigkeitsähnliche Bewegung ausführen. Jedoch liegen bei den bekannten Verfahren die Glaspunkte und Schmelzpunkte der eingesetzten Polymere um nur 20 bis 60°C auseinander (z.B. EP-A 379 684, DE-A 1 905 677 und 1 454 847).

Als Anwendungsgebiete sind bekannt (loc. cit, S. 435):
- mechanische Verfahrenstechnik wie Mischen, Fördern, Granulieren,
- Wärmeübertragung wie Rösten,
- Wärme- und Stoffübergang wie Destillieren, Trocknen, Sublimieren und Beschichten.

Es ist ebenfalls bekannt (vgl. (1), S. 437), daß die Wirbelschichttechnik Nachteile hat, wenn "Feststoffe, die beim Aufheizen ... Erweichungspunkte durchlaufen, zum Sintern oder zum unkontrollierbaren Kornaufbau im Bett" neigen.

Amorphe und teilkristalline Thermoplaste durchlaufen beim Erwärmen den Glaspunkt, der ebenfalls einen Erweichungspunkt darstellt. Dennoch ist es nach dem erfindungsgemäßen Verfahren möglich, amorphe und teilkristalline Thermoplaste mit der Wirbelschichttechnik in einem Reaktor nachzukristallisieren.

Gegenstand der Erfindung ist ein Verfahren zur Kristallisation von amorphen oder teilkristallinen Thermoplasten, bei denen der Glaspunkt und der Schmelzpunkt 130 bis 250°C auseinanderliegen, dadurch gekennzeichnet, daß diese in einen Wirbelbettreaktor in deren Glastemperaturbereich kristallisiert werden.

Der Temperaturbereich beim erfindungsgemäßen Verfahren richtet sich nach der Glasübergangstemperatur und dem Schmelzpunkt des eingesetzten Thermoplasten. Er Beträgt z.B. für Polyphenylensulfid 110 bis 240°C, bevorzugt 110 bis 140°C.

Diesem Reaktor wird eine gewogene Menge amorpher Thermoplast zugeführt. Der Reaktor wird durch eine Thermostatisierung auf einer definierten Arbeitstemperatur gehalten. Bevorzugt wird eine beheizte pneumatische Förderstrecke eingesetzt.

Zum Aufbau des Wirbelbettes wird die Arbeitstemperatur erhitztes (Schutz)Gas, z.B. Luft(Stickstoff), in gemessener Menge durch den Wirbelbettreaktor geleitet.

Die Reaktionsdauer richtet sich nach dem gewählten Produkten und dem zu erzielenden Kristallisationsgrad.

Das erfindungsgemäße Verfahren kann kontinuierlich, teilkontinuierlich oder absatzweise (Batch-Verfahren) betrieben werden.

Ein besonderer Vorteil dieser Anordnung ist die Tatsache, daß bei Temperaturen weit unterhalb des Schmelzpunktes gearbeitet werden kann, so daß eine verlängerte Reaktionszeit nicht zu einer Schädigung des Produktes führt.

Ein weiterer Vorteil der niedrigen Reaktionstemperatur ist die Möglichkeit, als Gas Luft benutzen zu können. Bei höherer Nachkristallisationstemperatur führt der in derLuft enthaltene Sauerstoff zu Vernetzungsreaktionen des Thermoplasten. Diese Vernetzung kann durch die gewählte Apparatur vermieden werden.

Wird das Verfahren kontinuierlich betrieben, kann die Gasgeschwindigkeit (Durchsatz) über einen bestimmten Grenzwert gesteigert werden, so daß der kristallisierte Thermoplast aus dem Reaktor ausgetragen wird. Weiterhin ist es möglich, durch eine übliche pneumatische Förderanlage den Reaktor mit weiterem noch amorphem Thermoplasten kontinuierlich oder teilkontinuierlich zu füllen.

In einer besonderen Ausführungsform kann der Gastrom pulsierend durch das Wirbelbett geleitet werden. Weiterhin ist vorteilhaft vor Eintrag der amorphen oder teilkristallinen Thermoplasten in den Wirbelbettreaktor bereits bis zu 50% (bezogen auf den Betriebsinhalt) kristallisierten Thermoplasten vorzulegen.

Der Kristallisationsgrad eines Thermoplasten läßt sich vorteilhaft in einem Differentialthermoanalysator (DTA) ausführen. Teilkristalline Thermoplasten zeigen drei typische Peaks im Aufheizdiagramm:

1.) ein Wärmesprung am Glaspunkt

2.) eine Wärmeabgabe = Kristallisation nach dem Glaspunkt

3.) eine Wärmeaufnahme = Schmelzvorgang am Schmelzpunkt

Da bei teilkristallinen Thermoplasten nur ein bestimmter Anteil amorphen Materials kristallisiert werden kann, wurde zur Bestimmung der Kristallinität die Fläche der Wärmeabgabe (Punkt 2 von oben) des unbehandelten Produktes mit der gleichen Fläche des behandelten Produktes verglichen. War keine Wärmeabgabe mehr zu erkennen, war der Thermoplast 100 % kristallin.

Gegebenenfalls können bei der Durchführung des Verfahrens übliche Nucleierungsmittel zugesetzt werden, z.B. Stearate.

Beispiele

Beispiel 1

Die Aufgabe, amorphe Thermoplaste nachzukristallisieren, wurde durch die im folgenden beschriebenen experimentelle Anordnung gelöst.

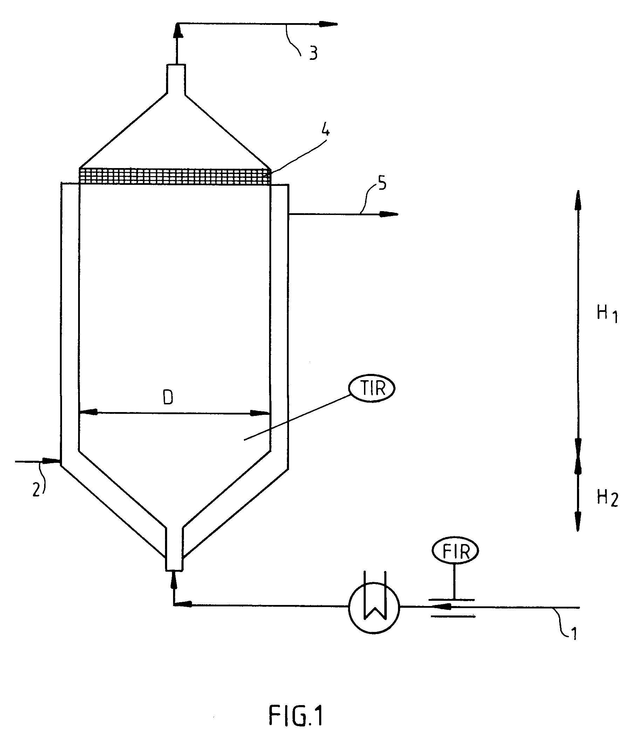

So wurde in Wirbelschicht-Reaktor (Figur 1) eingesetzt, der folgende Dimensionen hat:

| | | | |
|---|---|---|---|
| Höhe | $H_1$ | 0,256 | m |
| Höhe | $H_2$ | 0,05 | m |
| Durchmesser | D | 0,06 | m |
| Querschnittsfläche | S | 0,00283 | $m^2$ |
| Volumen | V | 0,00068 | $m^3$ |

In Figur 1 bedeuten:

1) Stickstoffleitung,

2) Thermostat,

3) Abgas,

4) Siebplatte,

5) Thermostat

FIR) Durchflußmesser mit Anzeige und Regelmöglichkeit

TIR) Temperaturmesser mit Anzeige und Regelmöglichkeit

Im Reaktor wurde als amorpher Thermoplast Polyphenylensulfid als Granulat in der vorgeheizten Apparatur vorgelegt.

Daten:

Granulat: klares, leicht braun gefärbtes Produkt

Viskosität nach Standard (s. z.B. EP-A 0 374 462): 95 Pa*s

Das Granulat wurde mit einem Gasstrom von mindestens 1600 $m^3/m^2$ Querschnittsfläche und Stunde durchströmt. In ersten Versuchen wurd die minimale Reaktortemperatur bestimmt.

## Ergebnis

| Temperatur | Zeit | Beobachtung |
|---|---|---|
| 140–145°C | 2 min | Beginn Kristallisation |
| 120–125°C | 2 min | "          " |
| 110–112°C | 3 min | "          " |
| 92– 93°C | 2 1/2 h | "          " |

Die minimale Kristallisationstemperatur wurde mit 110°C festgestellt.
In einem zweiten Versuch wurde der Kristallisationsverlauf über der Temperatur bestimmt.

Ergebnis

| Zeit nach Anstellen des Gastromes | Temperatur Reaktor | Kristallisatons- grad |
|---|---|---|
| 4 min | 110°C | 26 % s. Abb. 2 |
| 9 min | " | 73 % |
| 16 min | " | 79 % |
| 20 min | " | 80 % |
| 30 min | " | 83 % s. Abb. 3 |

Anhand der obigen Tabelle sowie den beigefügten Abbildungen ist zu erkennen, daß ca. 20 min Verweilzeit im Wirbelbettreaktor bei der Minimaltemperatur von 110°C benötigt werden, um einen Kristallisationsgrad von 80 % für Polyphenylensulfid zu erhalten. Dieser Kristallisationsgrad ist ausreichend, um die geplante Anwendung durchführen zu können.

Vergleichsbeispiel 2 (zur Demonstration der technischen Überlegenheit des erfindungsgemäßen Verfahrens)

Das Polyphenylensulfid aus Beispiel 1 wurde in einen Kolben eines Rotationsverdampfers gegeben und bei 110°C unter leichter Rotation kristallisiert.

Ergebnis

Die Granulatkörner klebten an der Wand sowie untereinander und waren aus dem Kolben nicht zu entnehmen. Während Außenbezirke eines Einzelkorns kristallisiert waren, war das Korn im Inneren noch amorph. Das Produkt war nicht für die geplante Aufgabe (s.o.) einsetzbar.

Vergleichsbeispiel 3

Auf einem Blech wurde das Polyphenylensulfid aus Beispiel 1 ausgeschüttet und 30 min. in einen Trockenschrank mit 110°C gestellt.

Ergebnis

Die Granulatkörner klebten zu einer körnigen Masse zusammen und waren für die vorgesehene Anwendung nicht einsetzbar.

**Patentansprüche**

1. Verfahren zur Kristallisation von amorphen oder teilkristallinen Thermoplasten, bei denen Glaspunkt und Schmelzpunkt 130 bis 250°C auseinander liegen, dadurch gekennzeichnet, daß diese in einem Wirbelbettreaktor im Bereich von Glastemperatur bis 50°C über dieser Temperatur kristallisiert werden.

2. Verfahren nach Anspruch 1, dadurch gekennzeichnet, daß als amorpher der teilkristalline Thermoplast Polyphenylensulfid eingesetzt wird.

FIG.1